# EUROPÄISCHE PATENTSCHRIFT

(11) **EP 0 590 384 B1**
(45) Veröffentlichungstag und Bekanntmachung des Hinweises auf die Patenterteilung: **10.12.1997**
(21) Anmeldenummer: 93114550.2
(22) Anmeldetag: 10.09.1993
(51) Int. Cl.: G05D 3/12, B60J 7/057

(54) **Vorrichtung zur Lageregelung eines bewegbaren Teils**
Device for position controlling a movable part
Dispositif pour régler la position d'une pièce mobile

(30) Priorität: 01.10.1992 DE 4232950
(43) Veröffentlichungstag der Anmeldung: 06.04.1994
(73) Patentinhaber: ROBERT BOSCH GMBH, 70442 Stuttgart (DE)
(72) Erfinder: Seiler, Hartmut, Dipl.-Phys., D-76532 Baden-Baden (DE); Lamm, Hubert, Dipl.-Ing. (FH), D-77876 Kappelrodeck (DE); Voehringer, Klaus, Dipl.-Ing., D-76316 Malsch (DE); Spinner, Klaus,, D-77815 Bühl-Neusatz (DE)

(56) Entgegenhaltungen:
- DE-A- 3 738 166
- DE-A- 3 829 405
- DE-A- 4 004 353
- DE-A- 4 127 047
- DE-A- 4 201 019
- US-A- 4 468 596

## Beschreibung

### Stand der Technik

Die Erfindung geht aus von einer Vorrichtung zur Lageregelung eines bewegbaren Teils nach der Gattung des Hauptanspruchs. Aus der DE-OS 38 29 405 ist eine Betätigungseinrichtung für elektromotorisch bewegbare Teile bekannt, die eine Lageregelung enthält. Als Lagesensor kommt ein System zum Einsatz, das einen inkrementellen Lagegeber und einen Absolutwert-Lagegeber enthält. Das vom Absolutwert-Lagegeber abgegebene Signal weist bei einem Überfahren einer Referenzlage einen Signalwechsel auf. Der Signalwechsel wird zu einer Kalibrierung des Lagesensors verwendet. In einem Ausführungsbeispiel entspricht die Referenzlage einer Schließstellung eines in einem Kraftfahrzeug angeordneten Schiebe-Hebe-Daches.

Der Erfindung liegt die Aufgabe zugrunde, eine Vorrichtung zur Lageregelung eines bewegbaren Teils anzugeben, bei der eine Zuordnung des vom Absolut-Lagegebers abgegebenen Signals zu einer Referenzlage mit hoher Genauigkeit möglich ist.

Die Aufgabe wird durch die im Hauptanspruch angegebenen Merkmale gelöst.

### Vorteile der Erfindung

Die erfindungsgemäße Vorrichtung weist den Vorteil auf, daß eine im Absolutwert-Lagegeber enthaltene richtungsabhängige Hysterese keinen Einfluß auf die Genauigkeit der Referenzlage hat, die aus dem vom Absolut-Lagegeber abgegebenen Signal abgeleitet wird. Das von der signalverarbeitenden Anordnung abgegebene Referenzlage-Überfahrsignal sorgt dafür, daß bei einem am Sollwertgeber eingegebenen Wert, der der Referenzlage entspricht, das bewegbare Teil die Referenzlage stets aus derselben Richtung kommend anfährt. Die gegebenenfalls vorhandene richtungsabhängige Hysterese des Absolutwert-Lagegebers wirkt sich deshalb auf die Zuordnung zu einer Referenzlage nicht mehr aus.

Vorteilhafte Weiterbildungen und Verbesserungen der erfindungsgemäßen Vorrichtung ergeben sich aus Unteransprüchen.

In einer vorteilhaften Weiterbildung der erfindungsgemäßen Vorrichtung ist vorgesehen, daß das Referenzlage-Überfahrsignal nach einem stattgefundenen Wechsel des vom Absolutwert-Lagegeber abgegebenen Signals noch für eine vorgebbare Zeit bereitgestellt wird. Mit dieser Maßnahme ist sichergestellt, daß das bewegbare Teil vor dem Reversieren des Antriebs eine Lage außerhalb des Hysteresebereichs des Absolutwert-Lagegebers erreicht hat.

In einer anderen zweckmäßigen Weiterbildung der erfindungsgemäßen Vorrichtung ist vorgesehen, daß das Referenzlage-Überfahrsignal nach einem Wechsel des vom Absolutwert-Lagegeber abgegebenen Signals noch solange auftritt, bis eine Entprellung des vom Absolutwert-Lagegeber abgegebenen Signals das Vorliegen eines stabilen Signals anzeigt. Diese Weiterbildung ist insbesondere vorteilhaft, wenn als Absolutwert-Lagegeber eine mit dem Antrieb gekoppelte Nockenscheibe eingesetzt wird, die mit einem mechanischen Schalter zusammenwirkt.

Die erfindungsgemäße Vorrichtung eignet sich zur Lageregelung von beweglichen Teilen, die in Kraftfahrzeugen angeordnet sind. Insbesondere ist die erfindungsgemäße Vorrichtung geeignet zur Lageregelung eines Schiebe-Hebe-Daches, wobei die Referenzlage vorzugsweise der Schließstellung des Daches zugeordnet ist.

Weitere vorteilhafte Weiterbildungen und Verbesserung der erfindungsgemäßen Vorrichtung ergeben sich aus weiteren Unteransprüchen in Verbindung mit der folgenden Beschreibung.

### Zeichnung

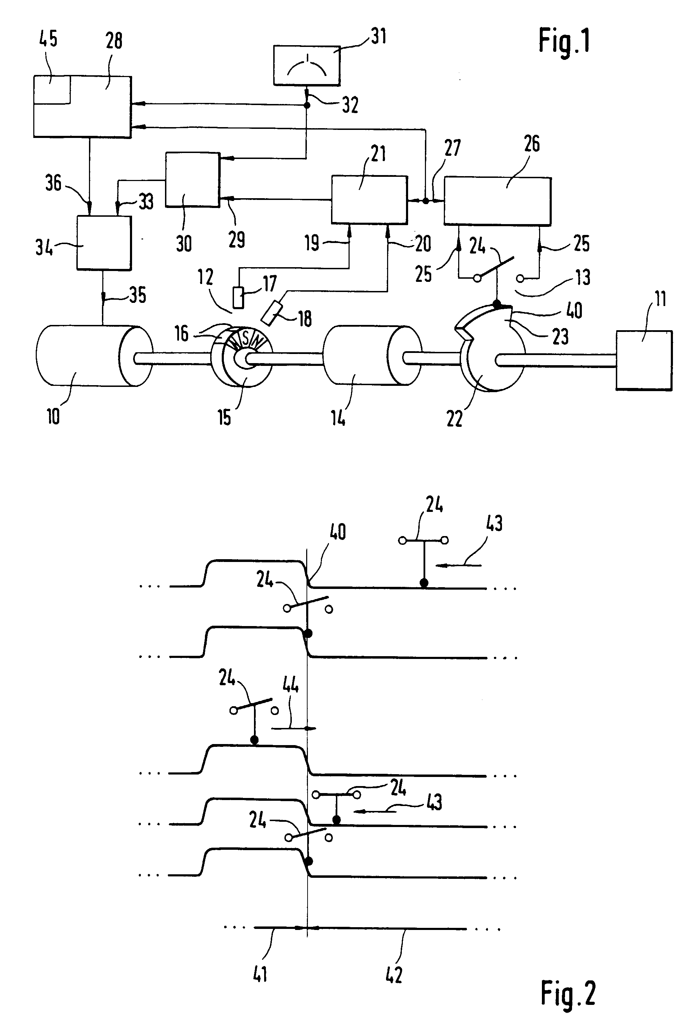

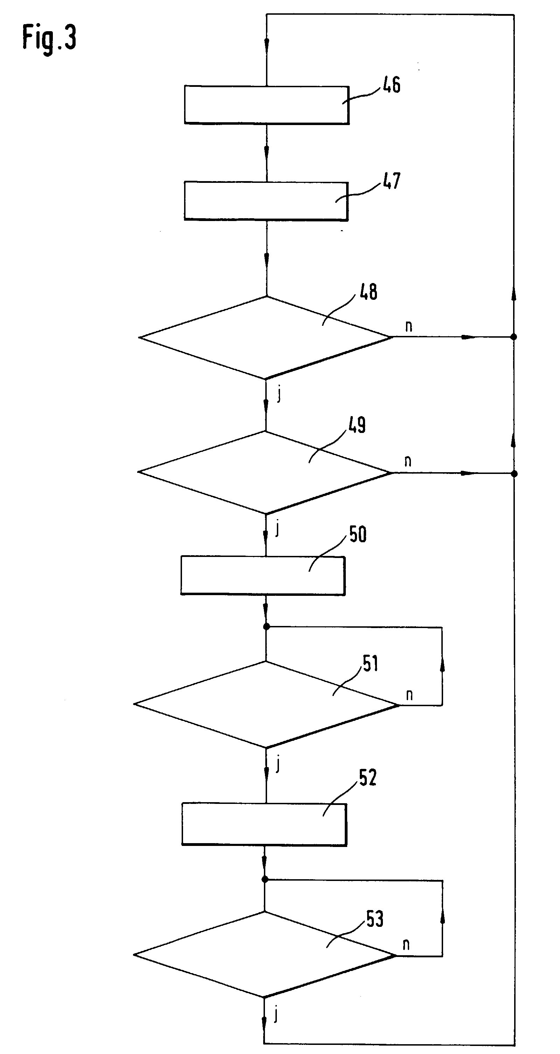

Figur 1 zeigt ein Blockschaltbild einer erfindungsgemäßen Vorrichtung zur Lageregelung, Figur 2 zeigt eine Abwicklung des Umfangs einer Nockenscheibe im Zusammenwirken mit einem Schalter in unterschiedlichen Betriebszuständen der Lageregelung und Figur 3 zeigt ein Flußdiagramm einer in der erfindungsgemäßen Vorrichtung enthaltenen signalverarbeitenden Anordnung.

Figur 1 zeigt einen Elektromotor 10 als Antrieb eines bewegbaren Teils 11, dessen Lage zu regeln ist. Die Lage des Teils 11 wird von einem inkrementellen Lagegeber 12 und von einem Absolutwert-Lagegeber 13 erfaßt. Die beiden Geber 12, 13 sind durch ein Getriebe 14 miteinander verbunden.

Der inkrementelle Lagegeber 12 enthält eine vom Elektromotor 10 bewegte Scheibe 15, die Permanentmagnet-Segmente 16 enthält. Benachbart zu den Segmenten 16 sind zwei magnetfeldempfindliche Sensoren 17, 18 angeordnet. Die Sensoren 17, 18 geben inkrementelle Lagesignale 19, 20 an eine Lageistwert-Ermittlung 21 ab.

Der Absolutwert-Lagegeber 13 ist im Ausführungsbeispiel als Nockenscheibe 22 gezeigt, die eine Nocke 23 enthält, welche eine Flanke 40 aufweist. Die Nocke 23 wirkt mit Schaltmitteln 24 zusammen, die ein Absolutwert-Lagesignal 25 an eine Entprellung 26 abgeben.

Die Entprellung 26 gibt ein entprelltes Absolutwert-Lagesignal 27 sowohl an die Lageistwert-Ermittlung 21 als auch an eine signalverarbeitende Anordnung 28 ab, die einen Speicher 45 enthält.

Ein von der Lageistwert-Ermittlung 21 abgegebenes Lage-Istsignal 29 wird in einem Regler 30 mit einem von einem Lagesollwertgeber abgegebenen Lagesollwertsignal 32 verglichen. Das Lagesollwertsignal 32 wird weiterhin der signalverarbeitenden Anordnung 28 zugeleitet.

Der Regler 30 gibt ein Lagestellsignal 33 an eine Stelleinrichtung 34 ab, die ein Betätigungssignal 35 für den Elektromotor 10 erzeugt. Der Stelleinrichtung 34 wird zusätzlich von der signalverarbeitenden Anordnung 28 ein Referenzlage-Überfahrsignal 36 zugeleitet.

Figur 2 zeigt in fünf Bildern jeweils eine Abwicklung des Umfangs der in Figur 1 gezeigten Nockenscheibe 22 mit jeweils unterschiedlichen Positionen der ebenfalls in Figur 1 gezeigten, mit der Nockenscheibe 22 zusammenwirkenden Schaltmittel 24. Die Flanke 40 der Nockenscheibe 22 trennt die vom beweglichen Teil 11 einnehmbare Lage in zwei Bereiche 41, 42.

Im ersten Bild von Figur 2 liegt das Schaltmittel 24 im Lagebereich 42. Eine Relativbewegung der Schaltmittel 24 in Richtung auf die Flanke 40 ist mit einem Pfeil 43 angedeutet. Im zweiten Bild von Figur 2 haben die Schaltmittel 24 die Flanke 40 erreicht. Beim Erreichen der Flanke 40 tritt ein Wechsel im Absolutwert-Lagesignal 25 auf.

Im dritten Bild von Figur 2 befinden sich die Schaltmittel 24 im Lagebereich 41. Eine Relativbewegung der Schaltmittel 24 in Richtung auf die Flanke 40 ist im dritten Bild mit einem Pfeil 44 eingetragen. Im vierten Bild von Figur 2 haben die Schaltmittel 24 die Flanke 40 bereits überfahren und befinden sich im Lagebereich 42. Danach machen die Schaltmittel 24 wieder eine Relativbewegung in Richtung auf die Flanke 40, die wieder mit dem Pfeil 43 angedeutet ist. Im fünften und letzten Bild von Figur 2 haben die Schaltmittel 24 gerade die Flanke 40 erreicht.

Die in Figur 1 gezeigte erfindungsgemäße Vorrichtung zur Lageregelung wird anhand der in Figur 2 gezeigten Bilder sowie anhand des in Figur 3 gezeigten Flußdiagramms näher erläutert:

Das vom Lagesollwertgeber 31 abgegebene Lagesollwertsignal 32 wird im Regler 30 mit dem von der Lageistwert-Ermittlung 21 abgegebenen Lage-Istsignal 29 verglichen. Eine Regelabweichung führt zu einer Ausgabe des Lagestellsignals 33, das die Stelleinrichtung 34 in das Betätigungssignal 35 für den Elektromotor 10 umsetzt. Das Signal 35 veranlaßt den Elektromotor 10 zur Drehung entweder in der einen oder in der anderen Antriebsrichtung. Der Elektromotor 10 ist Teil des gesamten Antriebs für das bewegbare Teil 11, dessen Lage mittels der beiden Lagegeber 12, 13 ermittelt wird.

Der inkrementelle Geber 12 ist im Ausführungsbeispiel als magnetischer Sensor gezeigt, der die Scheibe 15 enthält, welche die zumindest am Umfang angeordneten Permanentmagnet-Segmente 16 aufweist. Die von den Permanentmagneten 16 ausgehenden Felder werden von den magnetfeldempfindlichen Sensoren 17, 18 detektiert, die daraufhin die inkrementellen Lagesignale 19, 20 abgeben. Für die Grundfunktion reicht bereits ein Sensor 17, 18 aus. Die Verwendung von zwei Sensoren 17, 18 ermöglicht zusätzlich die Detektierung der Drehrichtung. Anstelle der im Ausführungsbeispiel gezeigten radialen Magnetisierung der Permanentmagnete 16 ist gleichermaßen eine axiale Magnetisierung geeignet, wobei dann die magnetfeldempfindlichen Sensoren 17, 18 in axialer Richtung zur Scheibe 15 anzuordnen sind. Der inkrementelle Lagegeber 12 ist vorzugsweise unmittelbar mit dem Elektromotor 10 verbunden. Bei einer Auslegung des Antriebs mit vergleichsweise hoher Drehzahl bezogen auf den Verstellweg des bewegbaren Teils 11 ist mit dieser Maßnahme eine hohe Lageauflösung möglich. Die Lageistwert-Ermittlung 21 kann aus den inkrementellen Lagesignalen 19, 20 allein die absolute Lage des bewegbaren Teils 11 noch nicht ermitteln. Die fehlende Information über die absolute Lage erhält die Lageistwert-Ermittlung 21 vom Absolutwert-Lagegeber 13.

Der Absolutwert-Lagegeber 13 ist im Ausführungsbeispiel gemäß Figur 1 als Nockenscheibe 22 mit der Nocke 23 gezeigt. Die Nocke 23 mit der Flanke 40 wirkt mit den Schaltmitteln 24 zusammen, die das Absolutwert-Lagesignal 25 an die Entprellung 26 abgeben. Die Schaltmittel 24 sind beispielsweise als Mikroschalter realisierbar. Ein Überfahren der Flanke 40 der Nockenscheibe 22 löst einen Schaltvorgang aus, der einem Signalwechsel des Absolutwert-Lagesignals 25 entspricht. Mittels des Signalwechsels kann die Lageistwert-Ermittlung 21 das Lage-Istsignal 29 kalibrieren.

Die Entprellung 26 beseitigt ein eventuell auftretendes Kontaktprellen der Schaltmittel 24.

Der Absolutwert-Lagegeber 13 kann in der beschriebenen Ausgestaltung als Nockenscheibe 22 ein eindeutiges Signal nur dann liefern, wenn der vom bewegbaren Teil 11 anfahrbare Lagebereich maximal einer Umdrehung der Nockenscheibe 22 entspricht. Zur Anpassung ist daher im allgemeinen das Getriebe 14 erforderlich.

Anstelle der in Figur 1 gezeigten Ausgestaltung des Absolutwert-Lagegebers 13 als Nockenscheibe 22, die mit den Schaltmitteln 24 zusammenwirkt, ist es auch möglich, einen magnetischen Sensor vorzusehen, der dem inkrementellen Sensor 12 entspricht, wobei die Scheibe im Minimalfall lediglich ein Permanentmagnetsegment enthalten muß, das mit einem magnetfeldempfindlichen Sensor zusammenwirkt. Die Entprellung 26 ist bei diesem magnetischen Sensor nicht erforderlich.

Das bewegbare Teil 11 kann eine vom Lagesollwertgeber 31 vorgegebene Lage zumindest in einem der in Figur 2 gezeigten beiden Lagebereichen 41, 42 anfahren. Der Absolutwert-Lagegeber 13 kann eine richtungsabhängige Hysterese aufweisen, die bei einem Übergang des beweglichen Teils 11 von einem in den anderen Lagebereich 41, 42 auftritt. Die Hysterese bedeutet, daß der Signalwechsel im Bereich der Flanke 40 an unterschiedlichen Lagen auftritt in Abhängigkeit davon, aus welcher Richtung die Flanke 40 angefahren wurde. Die Zuordnung des Signalwechsels zu einer Referenzlage des bewegbaren Teils 11 ist dann nicht mehr eindeutig. Erfindungsgemäß ist deshalb die signalverarbeitende Anordnung 28 vorgesehen, die dafür sorgt, daß das bewegbare Teil 11 die der Flanke 40 entsprechenden Referenzlage stets aus derselben Richtung kommend anfährt.

Das in Figur 3 dargestellte Flußdiagramm zeigt einen ersten Block 46, der eine Übernahme des in der signalverarbeitenden Anordnung 28 vorhandenen Lagesollwertsignals 32 in den Speicher 45 als alter Lagesollwert vorsieht. Im nächsten Block 47 erfaßt die signalverarbeitende Anordnung 28 das gerade vorliegende Lagesollwertsignal 32 als neuen Lagesollwert. In einer Abfrage 48 wird festgestellt, ob der neue Lagesollwert der Referenzlage entspricht. Falls dies nicht der Fall ist, wird zum ersten Block 46 zurückgegangen, der die Abspeicherung des Lagesollwerts in den Speicher 45 vorsieht. Wird in der Abfrage 48 dagegen festgestellt, daß der neue Lagesollwert der Referenzlage entspricht, dann wird zur weiteren Abfrage 49 gegangen, in der festgestellt wird, ob der alte Lagesollwert einer Lage in einem vorgegebenen Lagebereich 41, 42, hier beispielsweise im Lagebereich 41, entsprochen hat. Falls dies nicht der Fall ist, hat sich das bewegliche Teil 11 zuvor im Lagebereich 42 befunden und kann die Referenz lage in Richtung 43 unmittelbar anfahren. In den Regelkreis wird nicht eingegriffen. Falls jedoch festgestellt wurde, daß der alte Lagesollwert einer Lage im Lagebereich 41 entsprochen hat, wird die Ausgabe des Referenzlage-Überfahrsignals 36 im Block 50 veranlaßt.

Das Referenzlage-Überfahrsignal 36 ist in dem in Figur 1 gezeigten Ausführungsbeispiel der Stelleinrichtung 34 zugeleitet, die mittels des Betätigungssignals 35 dem Elektromotor 10 eine Drehrichtung vorgibt, die das bewegliche Teil in den Lagebereich 42 bringt. Anstatt das Referenzlage-Überfahrsignal 36 der Stelleinrichtung 34 zuzuführen, ist es ebenso möglich, mit dem Referenzlage-Überfahrsignal 36 das Lagesollwertsignal 32 zu maskieren und anstelle der vorgegebenen Referenzlage einen Wert vorzugeben, der im Lagebereich 42 liegt. Wesentlich ist es, daß das Referenzlage-Überfahrsignal 36 verhindert, daß das bewegliche Teil 11 die Referenzlage unmittelbar aus dem Lagebereich 41 kommend anfährt.

Beim anschließenden Überfahren der Referenzlage tritt ein Signalwechsel im Absolutwert-Lagesignal 25 auf, der in der Entprellung 26 von Kontaktprellvorgängen befreit wird. In einer Abfrage 51 stellt die signalverarbeitende Anordnung 28 fest, ob ein derartiger Signalwechsel stattgefunden hat. Falls dies der Fall ist, hat das zu bewegende Teil 11 mit Sicherheit den Lagebereich 42 erreicht, so daß das Referenzlage-Überfahrsignal 36 im Block 52 zurückgenommen werden kann. Zu diesem Zeitpunkt weist das bewegbare Teil 11 eine im vierten Bild von Figur 2 gezeigte Lage im Lagebereich 42 auf. Nach der Rücknahme des Referenzlage-Überfahrsignals 36 bringt der Regelkreis das bewegbare Teil 11 in Bewegungsrichtung 43 zurück zur Referenzlage.

Die Zeit, die zwischen dem Feststellen des Signalwechsels in der Abfrage 51 und der Überfahrsignalrücknahme im Block 52 liegt, muß zumindest solange sein, daß das bewegbare Teil 11 mit Sicherheit aus dem Hysteresebereich des Absolutwert-Lagegebers 13 herausgefahren ist. Im einfachsten Fall reicht hierzu bereits die Zeit für die Entprellung des Absolutwert-Lagesignals 25 in der Entprellung 26 aus.

In einer vorteilhaften Ausgestaltung ist vorgesehen, daß nach einem in der Abfrage 51 festgestellten Signalwechsel die im Block 52 veranlaßte Überfahrsignalrücknahme erst nach Ablauf einer vorgegebenen Zeit stattfindet, die unabängig ist von der Zeit, die für die Entprellung des Absolutwert-Lagesignals erforderlich ist.

In einer anderen Ausgestaltung kann vorgesehen sein, daß das im Block 50 ausgegebene Referenzlage-Überfahrsignal stets für eine fest vorgegebene Zeit ausgegeben wird. In dieser Ausgestaltung entfällt die Abfrage 51.

## Patentansprüche

1. Vorrichtung zur Lageregelung eines bewegbaren Teils (11), mit einem Lagesollwertgeber (31), einem Regler (30), einem Antrieb (10), sowie mit einem Lagesensor, der einen inkrementellen Lagegeber (12) und einen Absolutwert-Lagegeber (13) enthält, wobei der Absolutwert-Lagegeber (13) das Überfahren wenigstens einer Referenzlage des bewegbaren Teils (11), die zwei Lagebereiche (41, 42) voneinander trennt, mit einem Signalwechsel anzeigt, dadurch gekennzeichnet, daß eine signalverarbeitende Anordnung (28) vorgesehen ist, die einen Speicher (45) zum Hinterlegen eines alten Sollwertes enthält, daß die signalverarbeitende Anordnung (28) ein Referenzlage-Überfahrsignal (36) abgibt, das den Antrieb (10) zum Überfahren der Referenzlage (40) veranlaßt, wenn ein neuer Sollwert der Referenzlage (40) entspricht und wenn der alte Sollwert einer Lage in einem vorgegebenen Lagebereich (41, 42) entspricht, und daß die signalverarbeitende Anordnung (28) das Referenzlage-Überfahrsignal (36) nach einem festgestellten Signalwechsel des vom Absolutwert-Lagegeber (13) abgegebenen Absolutwert-Lagesignals (25) zurücknimmt.

2. Vorrichtung nach Anspruch 1, dadurch gekennzeichnet, daß die signalverarbeitende Anordnung (28) das Referenzlage-Überfahrsignal (36) bei einem festgestellten Signalwechsel nach Ablauf einer vorgegebenen Zeit zurücknimmt.

3. Vorrichtung nach Anspruch 1 oder 2, daß eine Entprellung (26) für das Absolutwert-Lagesignal (25) vorgesehen ist.

4. Vorrichtung nach Anspruch 2 und 3, dadurch gekennzeichnet, daß die vorgegebene Zeit durch die für die Entprellung benötigte Zeit festgelegt ist.

5. Vorrichtung nach Anspruch 1, dadurch gekennzeichnet, daß als Absolutwert-Lagegeber (13) ein magnetischer Sensor mit wenigstens einem Permanentmagneten und einem magnetfeldempfindlichen Sensor vorgesehen ist.

6. Vorrichtung nach Anspruch 1, dadurch gekennzeichnet, daß als Absolutwert-Lagegeber (13) eine Nockenscheibe (22) vorgesehen ist, die mit Schaltmitteln (24) zusammenwirkt.

7. Vorrichtung nach Anspruch 1, dadurch gekennzeichnet, daß als inkrementeller Lagegeber (12) ein magnetischer Sensor vorgesehen ist, der mehr als ein Permanentmagnet-Segment (16) enthält, das mit wenigstens einem magnetfeldempfindlichen Sensor (17, 18) zusammenwirkt.

8. Vorrichtung nach Anspruch 1, gekennzeichnet durch die Verwendung für bewegbare Teile (11), die in einem Kraftfahrzeug angeordnet sind.

9. Vorrichtung nach Anspruch 8, dadurch gekennzeichnet, daß als bewegbares Teil (11) ein Schiebe-Hebe-Dach vorgesehen ist.

10. Vorrichtung nach Anspruch 9, dadurch gekennzeichnet, daß die Referenzlage der geschlossenen Stellung des Schiebe-Hebe-Daches entspricht.

## Claims

1. Device for the positional control of a movable part (11), having a position setpoint generator (31), a controller (30), a drive (10) and having a position sensor which contains an incremental position transmitter (12) and an absolute position transmitter (13), the absolute position transmitter (13) indicating with a signal change that the movable part (11) has travelled beyond at least one reference position, which separates two positional ranges (41, 42) from each other, characterized in that a signal-processing arrangement (28) is provided which contains a store (45) for storing an old setpoint, in that the signal-processing arrangement (28) emits a signal (36) which represents travelling beyond a reference position and causes the drive (10) to travel beyond the reference position (40) if a new setpoint corresponds to the reference position (40) and if the old setpoint corresponds to a position in a predefined positional range (41, 42), and in that the signal-processing arrangement (28) withdraws the signal (36) which represents travelling beyond a reference position after a signal change is determined in the absolute position signal (25) emitted by the absolute position transmitter (13).

2. Device according to Claim 1, characterized in that the signal-processing arrangement (28) withdraws the signal (36) which represents travelling beyond a reference position when a signal change is detected, but after expiry of a predefined time.

3. Device according to Claim 1 or 2, characterized in that debouncing (26) is provided for the absolute position signal (25).

4. Device according to Claims 2 and 3, characterized in that the predefined time is defined by the time needed for the debouncing.

5. Device according to Claim 1, characterized in that a magnetic sensor having at least one permanent magnet and a magnetic field-sensitive sensor is provided as the absolute position transmitter (13).

6. Device according to Claim 1, characterized in that a cam disc (22), which interacts with switching means (24), is provided as the absolute position transmitter (13).

7. Device according to Claim 1, characterized in that a magnetic sensor is provided as the incremental position transmitter (12), which sensor contains more than one permanent magnet segment (16) which interacts with at least one magnetic field-sensitive sensor (17, 18).

8. Device according to Claim 1, characterized by its use for movable parts (11) which are arranged in a motor vehicle.

9. Device according to Claim 8, characterized in that a sliding and tilting roof is provided as the movable part (11).

10. Device according to Claim 9, characterized in that the reference position corresponds to the closed position of the sliding and tilting roof.

## Revendications

1. Dispositif de réglage de position d'une pièce mobile (11) comprenant :
- un capteur de valeur de position de consigne (31), un dispositif de réglage (30), un moyen d'entraînement (10), ainsi qu'un capteur de position comprenant un capteur de position incrémental (12) et un capteur de position en valeur absolue (13), le capteur de position en valeur absolue (13) indiquant le dépassement d'au moins une position de référence de la pièce mobile (11), position séparant deux plages de position (41, 42), avec un signal d'alternance,
caractérisé en ce qu'
il comprend un dispositif de traitement de signal (28) comportant une mémoire (45) pour recevoir une ancienne valeur de consigne,
- le dispositif de traitement de signal (28) fournissant un signal de dépassement de position de référence (36) qui commande l'entraînement (10) pour dépasser la position de référence (40) lorsqu'une nouvelle valeur de consigne correspond à la position de référence (40) et lorsque l'ancienne valeur de consigne correspond à une position dans une plage de position prédéterminée (41, 42) et,
- le dispositif de traitement de signal (28) reprend le signal de dépassement de la position de référence (36) après avoir constaté une alternance de signal pour le signal de position en valeur absolue (25) fourni par le capteur de position en valeur absolue (13).

2. Dispositif selon la revendication 1,
caractérisé en ce que
le dispositif de traitement de signal (28) reprend le signal de dépassement de la position de référence (36) lorsqu'une alternance de signal a été constatée après un temps prédéterminé.

3. Dispositif selon la revendication 1 ou 2,
caractérisé en ce qu'
il comporte un dispositif antirebondissement (26) pour le signal de position en valeur absolue (25).

4. Dispositif selon l'une quelconque des revendications 2 et 3,
caractérisé en ce que
le temps prédéterminé est fixé par le temps nécessaire au dispositif antirebondissement.

5. Dispositif selon la revendication 1,
caractérisé en ce que
le capteur de position en valeur absolue (13) est un capteur magnétique avec au moins un aimant permanent et au moins un capteur magnétosensible.

6. Dispositif selon la revendication 1,
caractérisé en ce que
le capteur de position en valeur absolue (13) comprend un disque à came (22) coopérant avec un moyen de commutation (24).

7. Dispositif selon la revendication 1,
caractérisé en ce que
le capteur de position incrémental (12) comprend un capteur magnétique comportant plus d'un segment à aimants permanents (16) coopérant avec au moins un capteur magnétosensible (17, 18).

8. Dispositif selon la revendication 1,
caractérisé en ce qu'
il est appliqué à des pièces mobiles (11) équipant un véhicule automobile.

9. Dispositif selon la revendication 8,
caractérisé en ce que
la pièce mobile (11) est un toit coulissant et relevable.

10. Dispositif selon la revendication 9,
caractérisé en ce que
la position de référence correspond à la position de fermeture du toit coulissant et relevable.
